Europäisches Patentamt

European Patent Office

Office européen des brevets

(11) Publication number: **0 353 800**
A2

# (12) EUROPEAN PATENT APPLICATION

(21) Application number: 89201783.1

(22) Date of filing: 05.07.89

(51) Int. Cl.⁴: **A01C 11/02** , **B65G 47/08** , **B65G 47/31** , **B07C 5/12**

(30) Priority: 07.07.88 NL 8801721
30.01.89 NL 8900227

(43) Date of publication of application:
07.02.90 Bulletin 90/06

(84) Designated Contracting States:
AT BE CH DE ES FR GB GR IT LI LU NL SE

(71) Applicant: **Flaton, Adrianus Franciscus Maria**
**Grote Achterweg 15**
**NL-2671 LR Naaldwijk(NL)**

(72) Inventor: **Flaton, Adrianus Franciscus Maria**
**Grote Achterweg 15**
**NL-2671 LR Naaldwijk(NL)**

(74) Representative: **Konings, Lucien Marie**
**Cornelis Joseph et al**
**OCTROOIBUREAU ARNOLD & SIEDSMA**
**Sweelinckplein 1**
**NL-2517 GK Den Haag(NL)**

(54) Method and device for handling plants.

(57) In a method for automatically planting plants each plant is transported separately via a pipe (65) and is arranged with its bottom end in a planting hole (62) arranged in soil, the diameter of which hole is considerably greater than the stem of this plant, whereby said plant is guided by means of said pipe (65) into said planting hole (62).

EP 0 353 800 A2

FIG. 1

# METHOD AND DEVICE FOR HANDLING PLANTS

The invention relates to a method for handling plants. Such plants can be rootless, for instance in the case of cuttings which are planted in soil in order to then grow into adult plants. Plants are difficult to process automatically, that is, with mechanical devices, mainly because of their unpredictable shape. In the case the plants are presented as a bundle, in the known method they are still removed manually from the bundle one by one, to be then processed, once again by hand, for instance cut, planted or packed.

The invention has for its object to facilitate the handling of plants.

To this end a method for planting according to the invention has the feature that each plant is transported separately via a pipe and arranged with its bottom end in a planting hole arranged in soil, the diameter of this hole being considerably larger than the stem of this plant, whereby the plant is guided into the planting hole by means of the pipe. This can be performed automatically. In the case the planting hole is filled with slurry the supply line can be lifted up, while the plant is held sufficiently firmly in the spacious planting hole. The portions of soil are not destroyed during the injection of slurry. A more or less thick suspension of soil, water and optional nutrients or germination stimulating substances can serve as slurry. The slurry is preferably a thick liquid.

The handling of plants is simplified by applying the method of claim 4.

Although plants have unpredictable shapes it is still possible to realize a good automatic selection of usable plants by applying the correct criteria or criterion. Preferred methods for sorting are designated in the claims 5-9.

If the plants are carried through a line of rollers, whereby the rollers - as seen in the direction of movement of the plants - have an increasing peripheral speed, these plants can be individually separated from each other in simple manner.

Since the supply of individually separated plants is difficult to realize in uniform manner a method according to the invention for handling plants has, in order to enable automatic discharge from a transporting device when the supply of individually separated plants to this transporting device is irregular, the feature that the plants are transported separately in holders from an intake station to a discharge station, whereby the holders are connected to at least one endless transporter element, that the transporting movements of the holders are disengaged from each other at the location of the intake station and that there is variation in opposing directions between both parts of the transporter element.

In order to nevertheless be able to transport plants with an automatic transporting device even when there may be irregular supply and to be able to process the plants thereafter without disturbance, the feature of claim 13 is preferably applied.

The invention also relates to and provides a device for handling plants. Such devices are designated in the claims 14-26.

The invention will be elucidated in the description following hereinafter with reference to the drawing.

In the drawing:

fig. 1 shows a perspective schematic view of a preferred embodiment of a first device according to the invention,

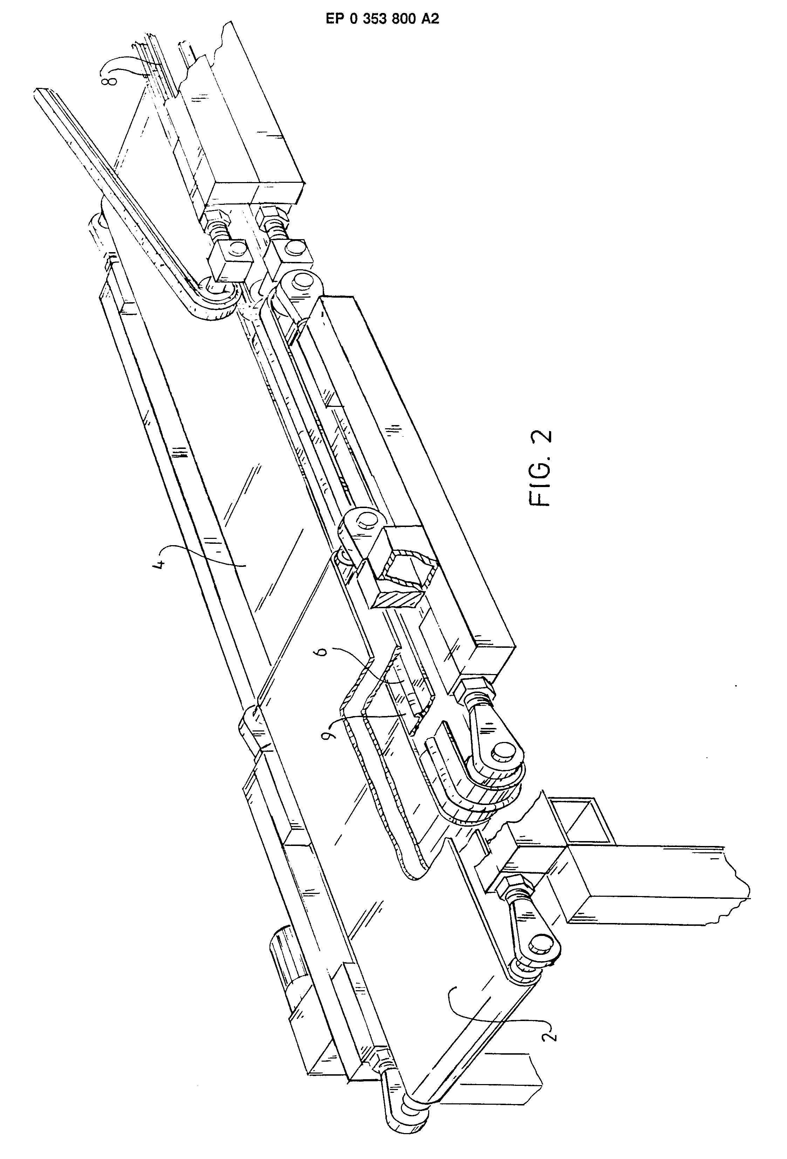

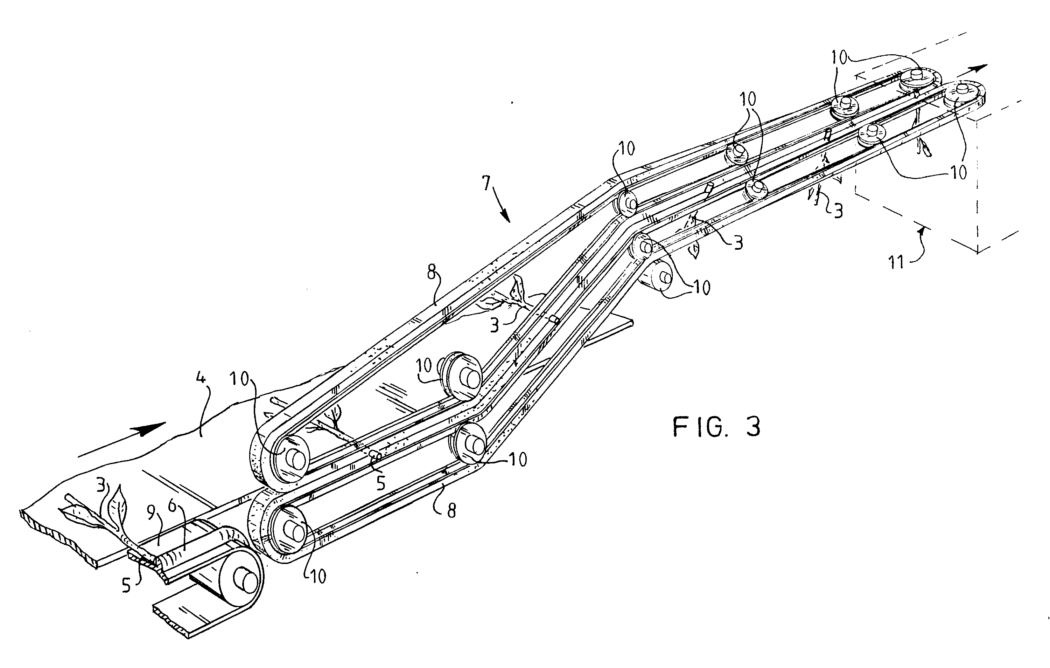

fig. 2, 3 and 4 show on a large scale the respective details II, III and IV from fig. 1,

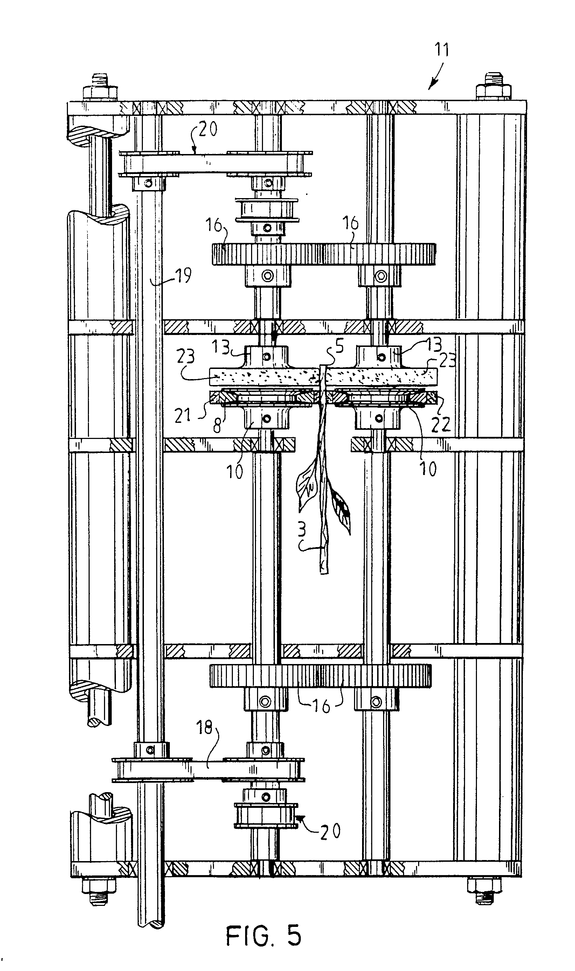

fig. 5 shows a partly broken away view along arrows V-V from fig. 4,

fig. 6, 7 and 8 show on a large scale the respective details VI, VII and VIII from fig. 1,

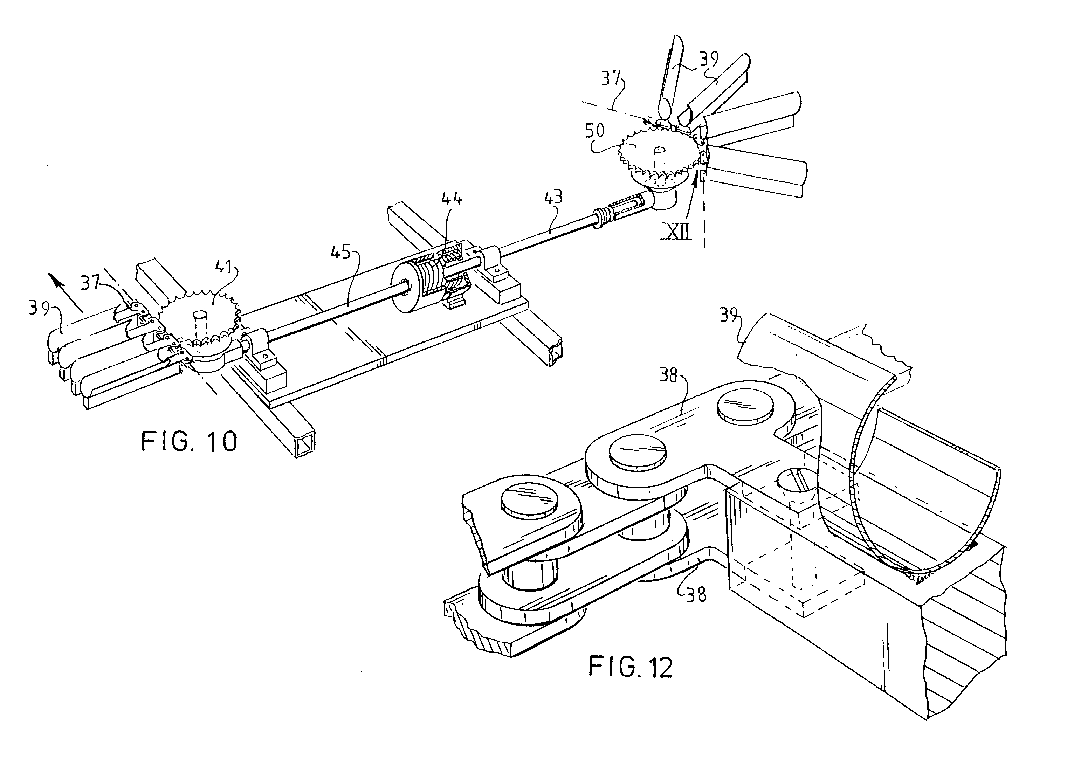

fig. 9 is a schematic view of detail IX from fig. 1,

fig. 10 and 11 show on a large scale the respective details X and XI from fig. 1,

fig. 12 shows on a large scale the detail XII from fig. 10,

fig. 13 and 14 show on a large scale details in successive processing stages,

fig. 15 and 16 each show a section in each case through a detail of another preferred embodiment of a device according to the invention,

fig. 17 and 18 each show a perspective view of two different variants of detail VIII from fig. 1,

fig. 19 is a side view of yet another variant of detail VIII from fig. 1, and

fig. 20 is a schematic diagram of a variant of the method indicated in fig. 13 and 14.

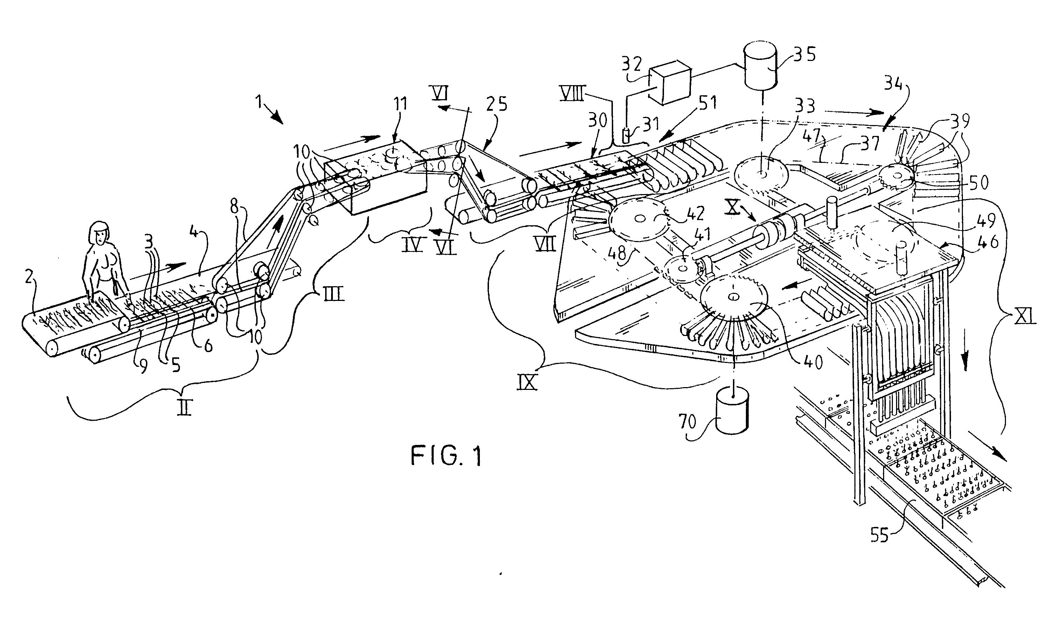

The device from fig. 1 is a device for handling plants, and particularly for planting cuttings.

The device 1 comprises a feed belt 2 on which are supplied sacks with bundles of cuttings 3. These cuttings are laid spread out by a person onto a conveyor belt 4 with their bottom ends 5 protruding and against a stop rail 6. This stop rail 6 is arranged on an endless belt 9 driven at the same speed as belt 4.

Disposed after the belt 9 as seen in the conveying direction and also adjacent to the conveyor belt 4 is a transporting device 7 of which two endless ropes 8 co-act for firm gripping of the bottom ends 5. These ropes 8 are trained and driven by rollers 10 which are disposed such that the cuttings 3 are carried from a lying position into a vertically hanging position. The belts 4 and 9 and the ropes 8 are driven constantly while the belt 2 is driven by the operative as required in each case, this usually being done stepwise and particularly at lower speed.

The cuttings 3 supplied close together in vertical hanging position are individually separated in an individual separation device 11. This consists of two series of rollers 12 co-acting in pairs and two series of rollers 13 co-acting in pairs which are arranged - as seen in the direction of movement of the cuttings 3 - between the rollers 12 and in staggered position relative thereto, this such that each cutting is gripped and transported alternately by a pair of rollers 12 and a pair of rollers 13.

The drive speed of the rollers 12 and 13, which in this embodiment have the same diameter, increases in the direction of transport of the cuttings 3 since the successive rollers 12, 13 are driven with increasing rope gears 14. The peripheral speeds are equal per pair of co-acting rollers 12, 13 because the left and right half of this individual separation device are mutually connected by means of toothed wheels 16. The individual separation device is driven by means of a shaft 17, a rope drive gear 18, a shaft 19 and increasing drive gears 20 from the rope conveyor 7.

A first acceleration of the cuttings 3 thus takes place already at the transition from rope conveyor 7 to the rollers 12, 13.

The ropes 8 are provided with a thick layer 22 of foam rubber. The rollers 12, 13 also have a thick ring 23 of foam rubber.

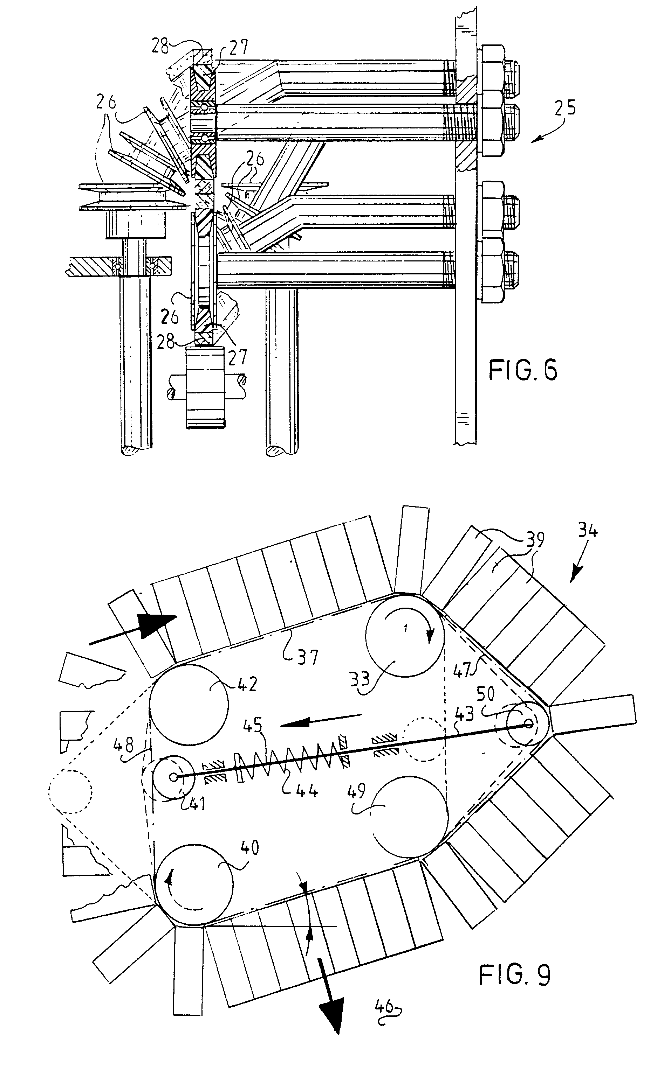

The rope conveyor 25 takes in principle the same form as rope conveyor 8. Fig. 6 shows the disposition of diverse guide rollers 26 for the ropes 27 coated with a layer 28 of foam rubber.

The rope conveyor 25 is driven from the individual separation device via an increasing drive gear 14 so that also at this transition there occurs an extra acceleration and therefore an increase in the spacing between the cuttings 3.

The rope conveyor 25 deposits the cuttings 3, spaced and facing in the same direction in horizontal position, onto a belt conveyor 30 above which is situated a detector 31 which via a computer 32 or other control means controls the drive motor 35 of a toothed wheel 33 of a chain conveyor 34.

The chain conveyor 34 comprises an endless chain 37 whereby holders 39 are fixed at regular intervals to links 38. These holders consist of a part cylinder shaped plate. The chain 37 is trained around stationary chain wheels 33, 49, 40 and 42 and around displaceable chain wheels 41 and 50 which are mounted on the respective sliding rods 43 and 45 which are forced away from one another by means of a spring 44.

The toothed wheel 40 is driven periodically for stepwise driving of holders 39 past the discharge station 46.

As a result of the displaceably arranged toothed wheels 44 and 50 the two parts 47 and 48 of the chain 37 can be extended or contracted in opposing directions or vice versa so that the driving of the holders 39 past the discharge station 46 is disengaged from the driving of the holders 39 at the position of the intake station 51, which driving is dependent on the not easily predictable supply of individually separated cuttings 3 by the individual separation device 11.

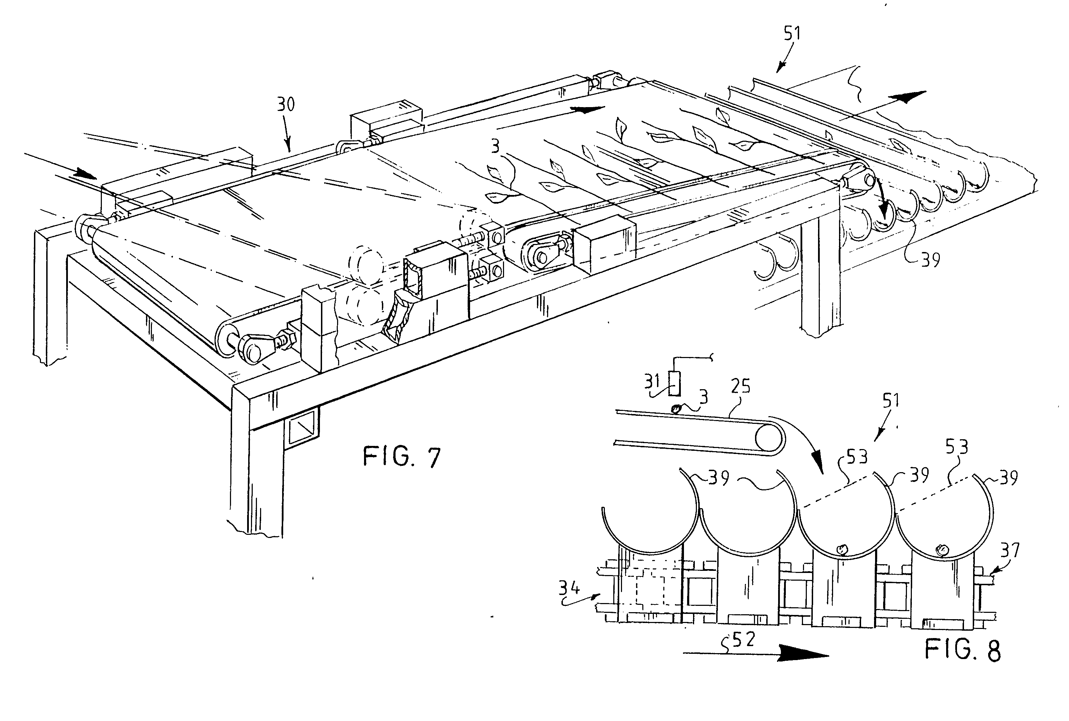

In accordance with fig. 8, when there is a reasonably regular supply, the cuttings drop into holders 39 of a chain conveyor 34 driven continuously at speed 52.

When there is too little or too much supply by the rope conveyor 25 the detector 31 will slow down or if necessary stop or accelerate the speed 52 via the computer 32. The holders 39 face towards the oncoming cuttings 3 with their opening 53.

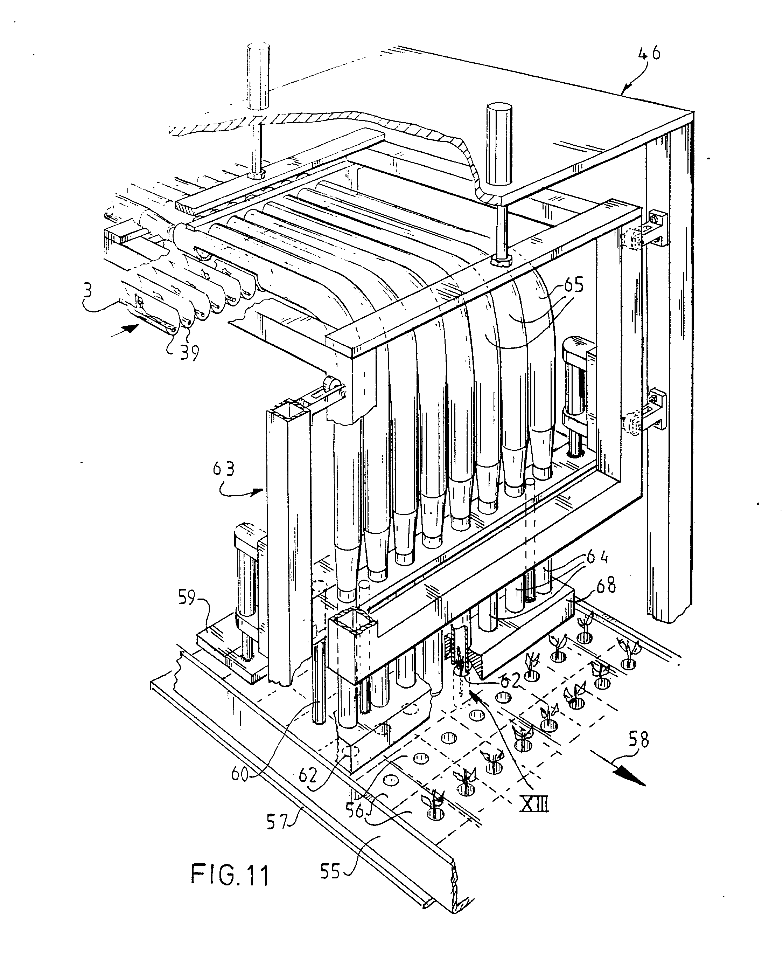

At the discharge station 46 (fig. 11) trays 55 with soil portions 56 are driven stepwise in arrow direction 58 on a conveyor belt 57, whereby the portions 56 are first provided with holes 62 for plants by means of a beam 59 with pins 60. This is performed in each case with a row of soil portions 56 at a time.

In a following step the soil portions provided with planting holes 62 arrive beneath the planter 63. This planter comprises a row of eight pipes 64 which each connect onto a pneumatic transport conduit 65 which intersects the path of the holders 39 at the position of the discharge station 46. In each planting procedure a series of eight holders 39 filled with cuttings 3 is first brought into line with the pneumatic conduits 65. The chain 37 is then brought to a stop here. Air is then blown simultaneously through all eight conduits 65, which results in the cuttings 3 being blown out of holders 39 into the planting holes 62, in which they come to stand loosely with their bottom ends 5.

A beam 68 with frustum pyramid-shaped recesses 69 is subsequently lowered, as a result of which a portion of this beam 68 becomes active as a pressure member 60 around the planting hole 62 and moves surrounding soil towards the planting hole 62 so that the cutting 3 is fixed into the soil well but still lightly. The outer periphery of each pressure member corresponds with the periphery of a soil portion 56 required for a cutting, which portion is slightly separated as a result from adjoining portions 56.

The valve placing the air blowing unit (not shown) in connection with the conduits 65 is controlled by a computer (not shown), as are the movements of the beam 68 and the stepwise driving of chain wheel 40 by means of a motor 70.

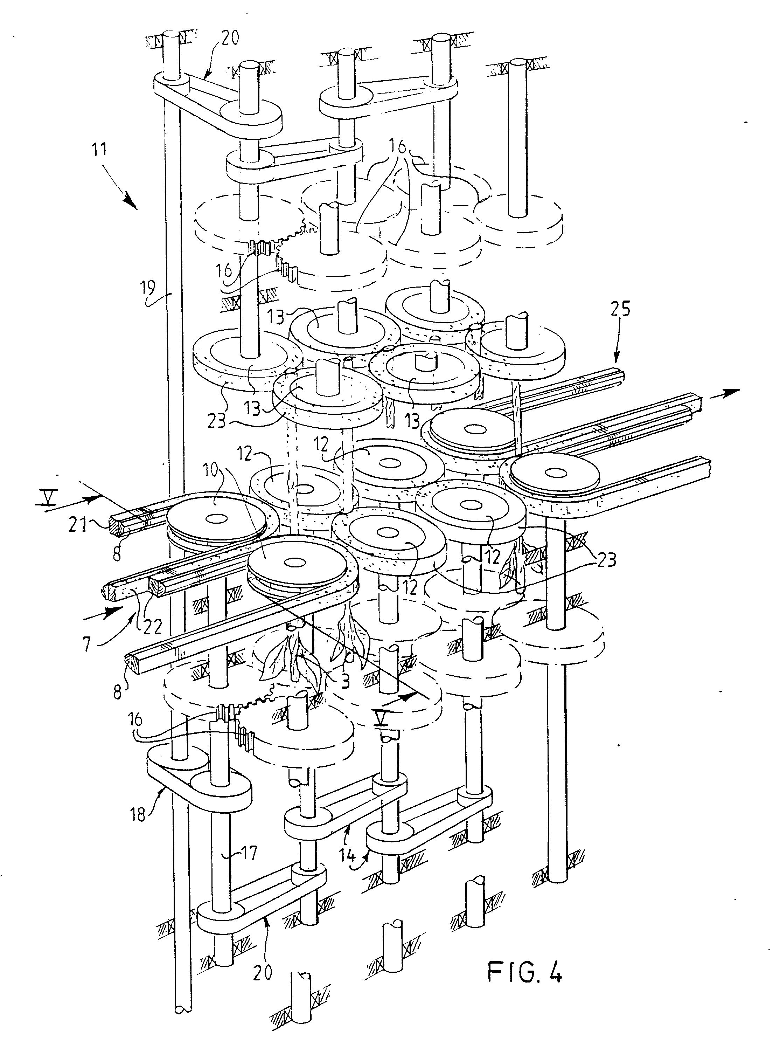

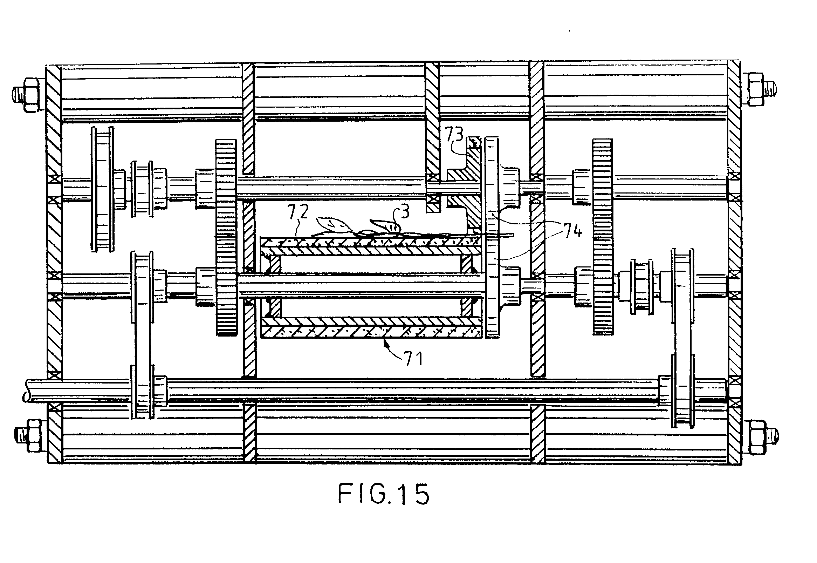

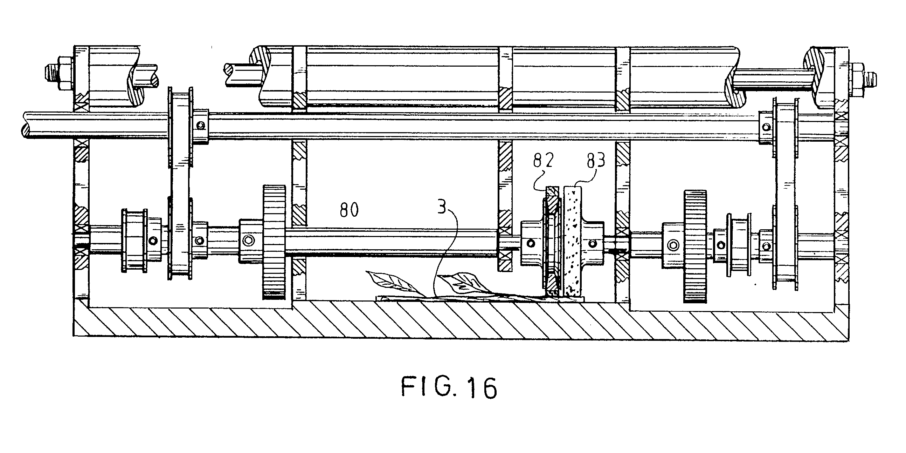

With reference to fig. 15 and 16 it is remarked that as a variant to the conveyors 7 and 25 which cause the cuttings 3 to change direction it is conceivable that the cuttings 3 remain horizontal. In fig. 15 the cuttings 3 are then supported by horizontal rollers 71 provided with a foam rubber covering 72. These rollers 71 then co-act with rollers 73 as the rollers 12 in fig. 4, while disposed adjacent to them in staggered position are pairs of rollers 74 which fulfil the function of rollers 13 in fig. 4. As according to fig. 16 the cuttings 3 are individually separated while they are pushed over a flat, smooth table 80 by means of rollers 82 and 83 which are in mutually staggered position and which likewise fulfil the function, each in co-action with the slide surface, of a pair of rollers 12 and 13 as in fig. 4.

For this purpose successive rollers 12, 13 are accelerated in the conveying direction of cuttings 3.

It is evident that the shafts for the rollers and toothed wheels are mounted in a frame by means of bearings, for instance as indicated in the drawings.

Liquid hormones are preferably injected into the planting holes before the cuttings are inserted therein. In addition the cuttings are sorted out by means of video cameras into diverse length sizes and optionally also by weight prior to being planted.

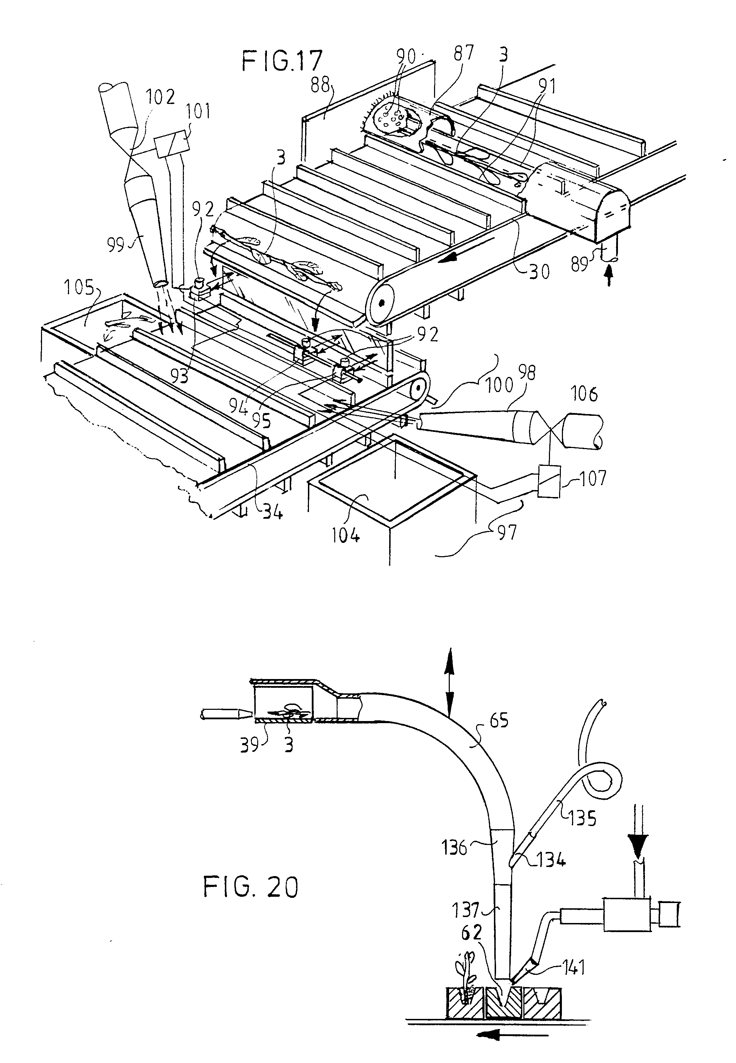

In fig. 17 the individually separated plants, in this case rootless plants, i.e. cuttings 3, are conveyed past a blower device 86 where they are blown against a stop surface 88 by means of air in an air tunnel 87 which connects onto the partitions 91 of the conveyor belt 3. The air enters via an air feed 89 and flows via openings 90. The cuttings 3 fall off the conveyor belt 30 at a scanning station 100 and then drop through scanning means formed by a plurality of, for instance three, light sources 92, reflector plate 96 and scanners 93, 94 and 95 in the form of a light sensitive cell.

The scanner 93 determines by the stem the presence of a plant 3, while scanners 94 determine whether the plant 3 is large or small enough. Scanner 92 actuates the (stepwise) driving of a conveyor belt 34. Present on the sorting station 97 are two sorting members 98 and 99 which under the control of scanners 93, 94 and 95 eject the cuttings 3 or allow them to pass, if necessary with the required time delay. If a cutting 3 is too small, in which case only scanner 93 scans this cutting 3, valve 102 is opened via actuating means 101 to allow passage of blowing air so that the cutting 3 is blown into a holder 104. In the case the cutting 3 is too large the scanners 93 and 95 initiate blowing of the cutting into holder 105 by means of blowing air which passes through the opened valve 106 through actuation by the actuating means 107.

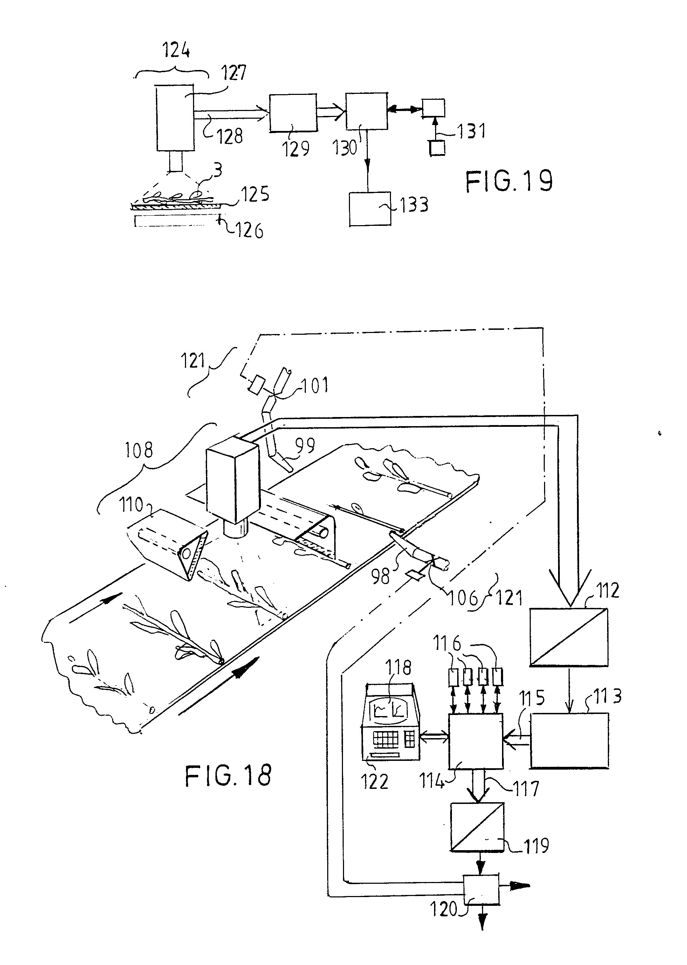

In the embodiment variant as in fig. 18 measurements are performed at a scanning station 108 on the passing cuttings 3 by means of a video camera 109 which receives the light radiated by a fluorescent lamp 110 and reflected by a white conveyor belt on a raster of scanning points, whereby each scanning point has a gray value which may or may not deviate from white. This gray value is dependent on the fact of whether or not the light passes through a stem or a leaf of the cutting 3.

In the case a ray of light passes through more than one leaf the scanning of the relevant light point becomes extra dark, i.e. in the case of two leaves, practically twice as dark. The same applies if the light goes through a leaf in slanted position relative to the light ray. A leaf in slanting position namely absorbs practically as much light as a leaf lying perpendicular to the rays of light.

The analog signal of the video camera 103 is converted in an analog-digital converter 112 into a digital signal which is processed in a gray value counter 113 and then sent to a control means 114. This compares the incoming signal 115 with set values stored in the memory 116 which are threshold values for the criteria of the plants. A monitor 118 indicates for instance how many cuttings 3, calculated from a particular moment in time, have met a particular criterion or criteria.

A digital output signal 117 of this control means 114 is converted in a digital-analog converter 119 and fed to a control member 120 which actuates one or more sorting members 121. Actuated in this way are for example the valves 101 and 106 for blowing pipes 98 and 99.

The converters 112, 119, the control member 120, the memories 116, the control means 114, the keyboard 122 and the monitor 118 can all form part of one and the same computer.

In preference this can be used for learning to sort. To this end 50 samples are for instance taken from a batch of cuttings 3 for sorting and the measured criteria thereof are shown visually on the monitor. It can then be decided where to set the threshold values, for example for the length, and for the image values, in order to ensure that a reasonably uniform nursery stock is used.

The threshold values are entered using the keyboard 112 as set values and stored in the comparators 116. Sorting then takes place with these set values. It is also possible to enter the threshold values with the keyboard 122 using experience and otherwise obtained requirements for threshold values of the criteria.

In the case of rooted plants it can also be determined through image recognition whether roots are present. In the case of sand-free roots it can be determined whether or not many fine hair-roots are present and this can be used as criterion.

In fig. 18 it is also possible to include as criteria the requirement that on the one side a stem (slight gray) is present and on another side leaf (much gray). In the unlikely case the cutting 3 lies the wrong way round it is ejected in order to prevent the cutting 3 being inserted head first.

In fig. 19 the cutting 3 passing a scanning station 124 is transported on a belt 125 of plastic which is as transparent as matt glass. Disposed beneath the belt is a fluorescent lamp 126. A video camera 127 picks up the received light and thereby the shaded image of cutting 3. The signal 128 is processed in an analog counter 129 and compared in a computer 130 with an entered set value 131 of a comparator 132. The output signal 132 is used for controlling a sorting means 133.

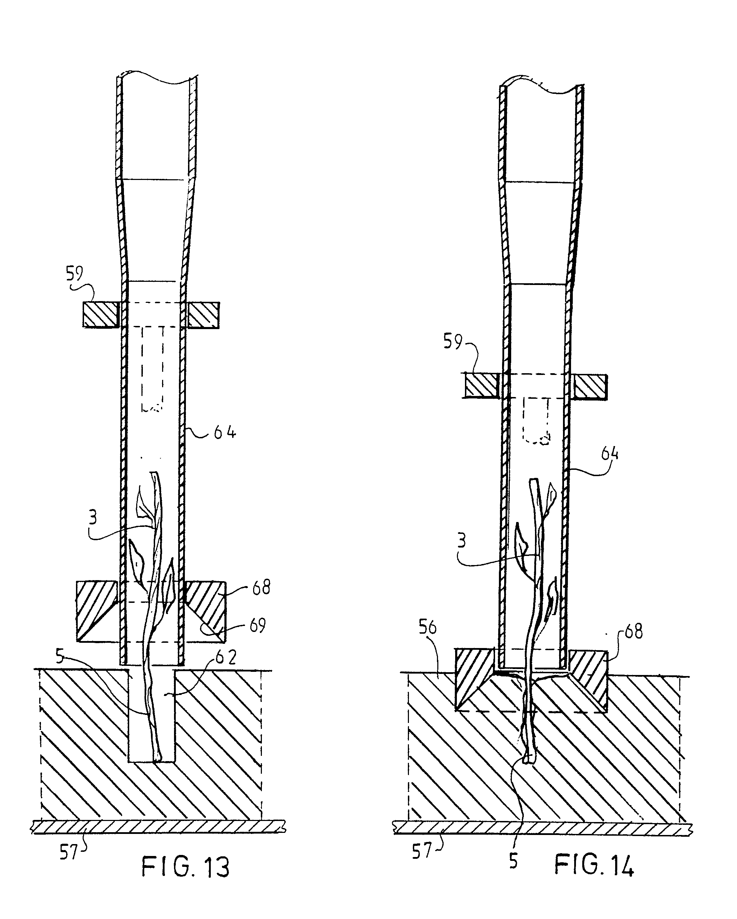

Fig. 20 shows in principle a side view shown partly in section of a variant of fig. 11. whereby each reciprocating transport conduit 65 is additionally provided at the position of a conical constriction 136 with a blowing air nozzle 134 connected to a hose 135 in order to blow the cuttings 3 through the quite narrow outlet 137 into a hole 62 having roughly the same diameter as the internal diameter of the outlet 137, which is in the order of magnitude of 2 cm, while the stem of the cutting has a diameter of ± 2mm. The internal diameter of the outlet 137 is preferably 22 mm. In the known state of the art holes of ± 2mm are pricked in the soil portions, corresponding with the diameter of the stem of the cutting. In contrast according to the invention the cutting is blown with air into the larger hole 62. As in fig. 13 and 14 the hole 62 is then closed up by being tamped down by means of a beam 68 with pyramid recesses 69. Preferably however in accordance with fig. 20 a slurry of soil with water, optionally with additional diluents, is injected into the hole 68 during or after blowing in of the stem of the cutting. The cutting 3 is then held fast by the suspension when the conduit 65 moves upward. The slurry comes out of a nozzle 141 connected to a screw pump 142 which is driven each time through a stroke such that the required slurry quantity fills the preferably conical hole 62.

The smallest diameter of the pipe at the outlet through which a cutting can be blown without problems has been determined through tests. This diameter is 20 mm. If it is the intention to blow cutting into the hole of the soil portion the pipe must have the same or a smaller diameter internally than the hole in the pot. The hole in the soil portion then also becomes ∅ 22 mm.

An internal measurement of 34 mm has been selected for the holders 39. The pipe connecting onto the holder is also 34 mm internally. The pipe is curved so that the cutting lying horizontally in a holder is placed straight up in potting soil. After the bend the pipe narrows from ∅ 34 mm internally to ∅ 22mm. The cutting is blown through the pipe with the stem to the front.

The different transitions must run smoothly one to the other. There may not be any edges on which the cutting can catch. This applies for the constriction 136 and certainly for the starting point to get the cutting out of the holder into the pipe. A funnel-like block has been made between the pipe and the holder 39 so that they connect onto one another well.

The cutting has to be set gradually into motion. A hard blast of air has a disadvantageous effect. The cutting does not get moving evenly with a hard blast of air. The air passes along the cutting, much air is consumed and the result is rather poor. It is much more favourable to open the air valve gradually. The cutting assumes the same speed as the air flow and is blown easily out of the holder 39 into the pipe. The bend in the pipe does not give any problems, the cutting 3 is blown through it easily.

Nor need the constriction 136 and the thinner pipe be a problem. If care is taken that the cutting maintains speed it will not catch in the constriction 136 or in the thinner portion. Blowing air into the constriction 136 has a favourable effect, this provides a suction action at the beginning of the pipe and additional air at the bottom so that the cutting keeps going in the thinner portion. The suction effect is not sufficient to get the cutting moving.

The best result is achieved by setting the cutting in motion with blowing air. The valve must be opened gradually. In order to keep the cutting moving, air is blown into the constriction 136. This also has the further advantage that it makes less noise and that less air is used.

## Claims

1. Method for planting plants, **characterized in that** each plant is transported separately via a pipe and is arranged with its bottom end in a planting hole arranged in soil, the diameter of which hole is considerably greater than the stem of this plant, whereby said plant is guided by means of said pipe into said planting hole.

2. Method as claimed in claim 1, **characterized in that** the plant is carried into the planting hole by means of pneumatic transport.

3. Method as claimed in claim 1 or 2, **characterized in that** the planting hole is filled with a slurry.

4. Method for sorting plants, **characterized in that** the plants are individually transported past a scanning station,

a measurement is performed on said plants relating to at least one criterion, and

at least one sorting member is controlled in accordance with the measured criterion.

5. Method as claimed in claim 4, **characterized in that** taken as criterion is the length of the plants, the distance between the bottom end of a cutting and the point of attachment of the lowest leaf and/or a criterion dependent on the plant image, for instance leaf quantity, whereby the sorting is preferably performed subject to at least two criteria, for example in accordance with the length and the leaf quantity.

6. Method as claimed in claim 4 or 5, **characterized in that** on the scanning station at least one criterion of the plants is scanned with at least one video camera.

7. Method for handling plants, **characterized in that** the said plants are transported separately in holders from an intake station to a discharge station, whereby said holders are connected to at least one endless conveyor element, that the conveying movements of said holders are disengaged from one another at the position of said intake station and at the position of said discharge station and that between both stations the lengths of both parts of the conveyor element are varied in opposing directions, whereby the plants are preferably scanned at a supply station with detection means and the driving of a transporting means for picking up plants is controlled in accordance with these detection means.

8. Device for planting plants, **characterized by** a pipe for depositing a plant in a planting hole, whereby the diameter of said pipe and of said planting hole are considerably greater than the stem of the plant.

9. Device as claimed in claim 8, **characterized in that** the pipe is provided with pneumatic drive means for propelling the plant, whereby preferably in addition to a blow air feed at the entrance end of said pipe there is a secondary air nozzle present close to a narrowed outlet end of said pipe.

10. Device as claimed in claim 8 or 9, **characterized by** means for supplying each planting hole with slurry.

11. Device for performing the method as claimed in any of the claims 4-6, **characterized by**:

transporting means for transporting plants past a scanning station, scanning means for scanning at least one criterion of said plants,

and at least one sorting member controlled subject to at least one criterion.

12. Device as claimed in claim 11, **characterized in that** the sorting member is controlled at least subject to the leaf quantity.

13. Device for planting plants **characterized** by at least one soil mover for filling up the planting hole.

14. Device as claimed in claim 13, **characterized in that** the soil mover comprises at least one pressure member which moves soil in the vicinity of the planting hole towards the hole, which pressure member is preferably active on at least two opposite sides of said planting hole and which preferably consists of an up and downward movable ring.

15. Device for handling plants, **characterized by** a line of rollers for transporting plants therethrough, whereby said rollers - as seen in the direction of movement of the plants - have an increasing peripheral speed, whereby successive rollers of said line are preferably disposed in staggered position relative to each other.

16. Device for handling plants, **characterized by** holders for transporting plants individually from an intake station to a discharge station, whereby said holders are connected to at least one endless conveyor element, that the conveying movements of said holders at the position of said intake station and at the position of said discharge station are disengaged from one another and that between both stations the lengths of both parts of said conveyor element are variable in opposing directions.

17. Device as claimed in claim 16, **characterized by** a conveyor device with holders for separate accommodation of plants, characterized by detection means which scan said plants, whereby in preference said detection means are disposed at an intake station and control the driving of the conveyor device.

FIG. 1

EP 0 353 800 A2

FIG. 2

EP 0 353 800 A2

FIG. 3

FIG. 4

FIG. 5

FIG. 6

FIG. 9

FIG. 7

FIG. 8

EP 0 353 800 A2

FIG. 10

FIG. 12

FIG.11

FIG. 13

FIG. 14

FIG.15

FIG. 16

EP 0 353 800 A2

FIG.17

FIG. 20

FIG.19

FIG.18